# EUROPÄISCHE PATENTSCHRIFT

(11) **EP 1 647 370 B1**
(45) Veröffentlichungstag und Bekanntmachung des Hinweises auf die Patenterteilung: **15.04.2009**
(21) Anmeldenummer: 05022194.4
(22) Anmeldetag: 12.10.2005
(51) Int. Cl.: B25J 19/00

(54) **Gelenkarmroboter mit ein Teleskop aufweisender integrierter Laserstrahlführung**
Articulated robot with a laser beam guiding system comprising a telescope
Robot articulé avec système de guidage de rayon laser comprenant un téléscope

(30) Priorität: 14.10.2004 DE 102004050456
(43) Veröffentlichungstag der Anmeldung: 19.04.2006
(73) Patentinhaber: JENOPTIK Automatisierungstechnik GmbH, 07745 Jena (DE)
(72) Erfinder: Schmieder, Frank, 07616 Bürgel (DE); Sonnekalb, Dieter, 99510 Niederrossla (DE)
(74) Vertreter: Schaller, Renate

(56) Entgegenhaltungen:
- DE-A1- 10 157 891
- US-A1- 2004 182 998

## Beschreibung

Die Erfindung betrifft einen Gelenkarmroboter mit integrierter Laserstrahlführung, wie er gattungsgemäß aus der DE 101 57 891 A1 bekannt ist.

Für die 3d-Bearbeitung mittels CO₂-Laser sind am Markt verschiedene Vorrichtungssysteme verfügbar, die in drei Gruppen unterteilt werden können, kartesische Systeme, die als Ständer- oder Portalanordnungen ausgeführt sind, Knickarmroboter (Gelenkarmroboter) mit Spiegelgelenkarmen und Gelenkarmroboter, bei denen die Laserstrahlung innerhalb der Gelenkarme des Roboters geführt wird.

Letzt genannte sind insbesondere für Leistungen bis zu 500 W bekannt. In der Regel bestehen die Gelenkarme aus 5 Teilarmen, die untereinander jeweils über ein Drehgelenk miteinander verbunden sind. Der erste Teilarm des Gelenkarmes ist mit seinem freien Ende mit dem Roboter verbunden, während am freien Ende des letzten, in der Regel fünften Teilarmes die Laserstrahlung über eine Fokussierlinse austritt. Üblicherweise ist der Laser auf dem dritten Teilarm befestigt. Die Laserstrahlung wird über einen Spiegel in diesen Teilarm eingekoppelt und über die nachfolgenden Teilarme bis hin zur Fokussierlinse gelenkt, die sich am freien Ende des Gelenkarmes befindet. Laser geringerer Leistung, können mit geringer werdendem Gewicht auf weiter außen liegende Teilarme, d. h. mit einem größeren möglichen Abstand zum Roboter befestigt werden. Damit kann die Länge der Wegführung der Laserstrahlung innerhalb des Gelenkarmes verkürzt werden.

In der DE 35 30 189 A1 ist eine Einrichtung zur Lagekorrektur eines über ein Gelenkarm geführten Laserstrahls offenbart. Die Strahlumlenkung von einem Teilarm in den jeweils nächsten erfolgt innerhalb des Gelenkarmes über Umlenkspiegel, die an Drehgelenken derart befestigt sind, sodass jeder Spiegel mitsamt dem darauffolgenden Teilarm um die Achse des auftreffenden Laserstrahls drehbar ist. Der Laserstrahl wird so von der Laserstrahlungsquelle bis hin zum Schneidkopf geführt, wo er über eine Fokussieroptik den Gelenkarm verlässt.

Auch in der EP 0 224 451 B1 ist ein mehrachsiger Industrieroboter beschrieben, bei dem die Laserstrahlung über eine Vielzahl von Spiegeln innerhalb des Gelenksystems bis hin zu einer Fokussierlinse geführt wird.
In beiden Lösungen wird die Laserstrahlung auf ihrem Weg zur Fokussierlinse hin lediglich umgelenkt, nicht jedoch in ihrer Bündelform oder -größe beeinflusst, wodurch die Divergenz und der Strahldurchmesser der Laserstrahlung unbeeinflusst bleibt.

Bei einer in der DE 101 57 891 A1 offenbarten Laserbearbeitungsvorrichtung ist ein Laser innerhalb eines Roboterarmes angeordnet. Innerhalb dieses Roboterarms ist ein Teleskop angeordnet. Der dadurch auf einen größeren Strahldurchmesser aufgeweitete Laserstrahl wird nachfolgend über drei Umlenkspiegel in den Laserbearbeitungskopf mit einem Objektiv zur Fokussierung der Laserstrahlung auf das Werkstück reflektiert. Es ist nicht genauer ausgeführt, um welche Art von Teleskop es sich bei einem hier verwendeten handeln soll. In jedem Fall handelt es sich um eine zusätzliche optische Baugruppe, die ausschließlich der Strahlformung dient. Bei Verwendung eines Linsenteleskops, was hier als sehr wahrscheinlich angenommen werden kann, entstehen Strahlungsverluste gegenüber einem Strahlführungssystem ohne das Teleskop.

Der Einsatz von. Teleskopen in der Lasertechnik zur Strahlformung ist seit der Erfindung des Lasers bekannt. Sie bestehen grundsätzlich aus zwei strahlformenden Elementen, die in Zusammenwirkung ein paralleles Strahlenbündel mit einem bestimmten Strahldurchmesser in ein paralleles Strahlbündel mit einem anderen Durchmesser umformt. Man unterscheidet zwei grundlegende Typen - Linsenteleskope und Spiegelteleskope. Sie werden bei allen bekannten Laserwellenlängen eingesetzt.

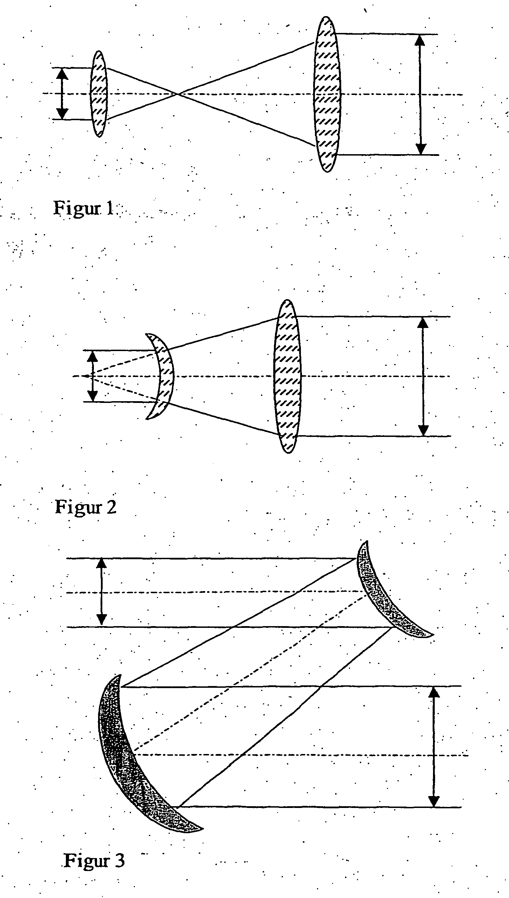

Bei den Linsenteleskopen sind Teleskope mit zwei Bikonvexlinsen nach Kepler (Fig. 1) und mit einem Meniskus und einer Bikonvexlinse nach Galilei (Fig. 2) am bekanntesten.

Bei den Spiegelteleskopen unterscheidet man ebenfalls verschiedene Varianten. - Eine erste Variante mit einem Konvex- und einem Konkavspiegel, die in Figur 3 und eine zweite Variante mit zwei Konkavspiegeln, die in Fig. 4 aufgezeigt ist. - Es sind aber auch Kombinationen zwischen Spiegel und Linse möglich, z. B. wie in Fig. 5 dargestellt, mit einem Konvexspiegel, einem Planspiegel und einer Bikonvexlinse.

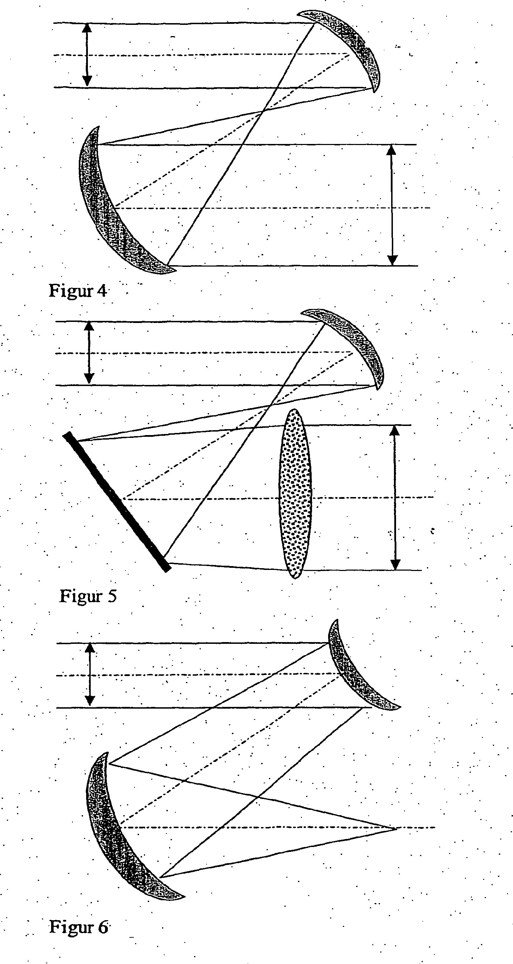

Es ist dem Fachmann bekannt, dass die in den Fig. 1 bis Fig. 5 schematisch aufgezeigten optischen Teleskope über die Wahl der Brennweiten und Abstände der abbildenden Elemente zueinander, in strahlfokussierende Systeme umgewandelt werden können. In Fig. 6 ist ein solches System mit einem Konvex- und einem Konkavspiegel dargestellt.

Der Nachteil von Linsenteleskopen gegenüber Spiegelteleskopen liegt hauptsächlich in den Strahlungsverlusten. Da jedes Linsenteleskop aus mindestens zwei bzw. mehr Linsen besteht und jede Linse zwei optische Medienübergänge Luft-Substrat bzw. Substrat-Luft aufweist, sind die Leistungsverluste gegenüber zwei Spiegelflächen beim Spiegelteleskop um 5 % oder mehr höher, da jede optische Fläche ca. 0,5 % Reflexionsverlust und jedes transmittiv durchdrungene Linsensubstrat nochmals 0,5 % Leistungsverlust durch Absorption aufweist. Somit liegen die theoretischen Leistungsverluste bei der Strahlführung über ein Spiegelteleskop bei ca. 1 % und über ein Linsenteleskop bei ca. 3 %. In der Praxis sind es in der Regel bis zu 5 %.

Die Aufgabe eines Teleskops besteht in der Vergrößerung bzw. Verkleinerung des Strahldurchmessers sowie seiner Divergenz (Strahlöffnungswinkel). Mit steigender Aufweitung A wird die Divergenz 1/A kleiner und gleichzeitig wird mit steigender Aufweitung in gewissen Bereichen die Möglichkeit einer besseren Fokussierung der Laserstrahlung gegeben.

Der Erfindung liegt die Aufgabe zugrunde, innerhalb eines Gelenkarmes eines Gelenkarmroboters das optische System zur Führung eines Laserstrahles so zu verändern, dass die Strahldivergenz und der Strahldurchmesser des auf eine Fokussierlinse auftreffenden Laserstrahles bei minimalem Einsatz von optischen Bauelementen bestimmt beeinflusst werden.

Diese Aufgabe wird mit einem Gelenkarmroboter gemäß Anspruch 1 gelöst.

Eine vorteilhafte Ausführung der Erfindung ist im Unteranspruch 2 beschrieben.

Die Erfindung soll nachfolgend anhand von Ausführungsbeispielen näher erläutert werden , wobei die optischen Systeme gemäß den Figuren 5, 7 and 8 leine Ansführungsbeispiele der Erfindung denstellen. Hierzu zeigen:
Fig. 1 Optikschema eines Teleskops nach Kepler
Fig. 2 Optikschema eines Teleskops nach Galilei
Fig. 3 Optikschema einer ersten Variante eines Spiegelteleskops
Fig. 4 Optikschema einer zweiten Variante eines Spiegelteleskops
Fig. 5 Optikschema eines Spiegel-Linsen-Teleskops
Fig. 6 fokussierendes Spiegel system

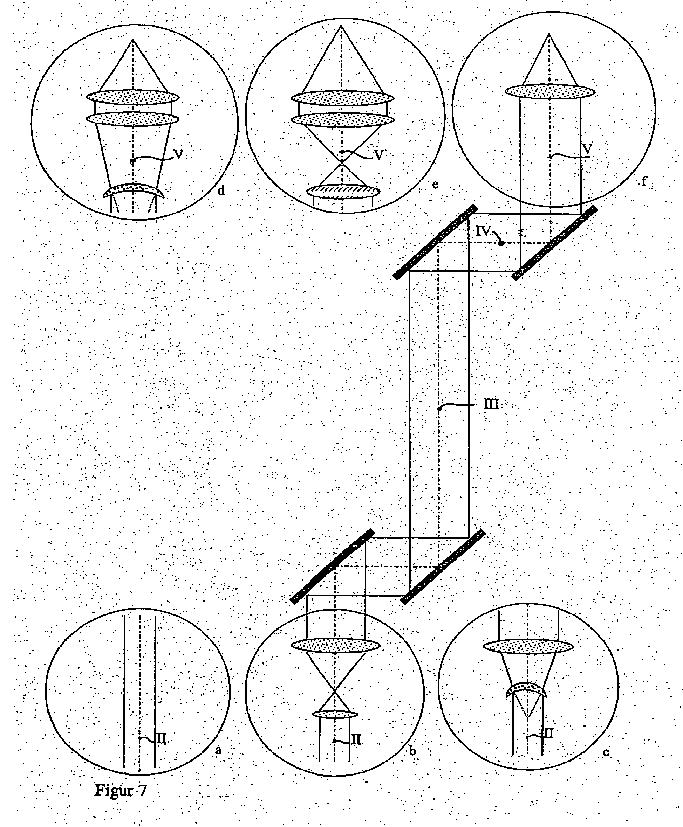

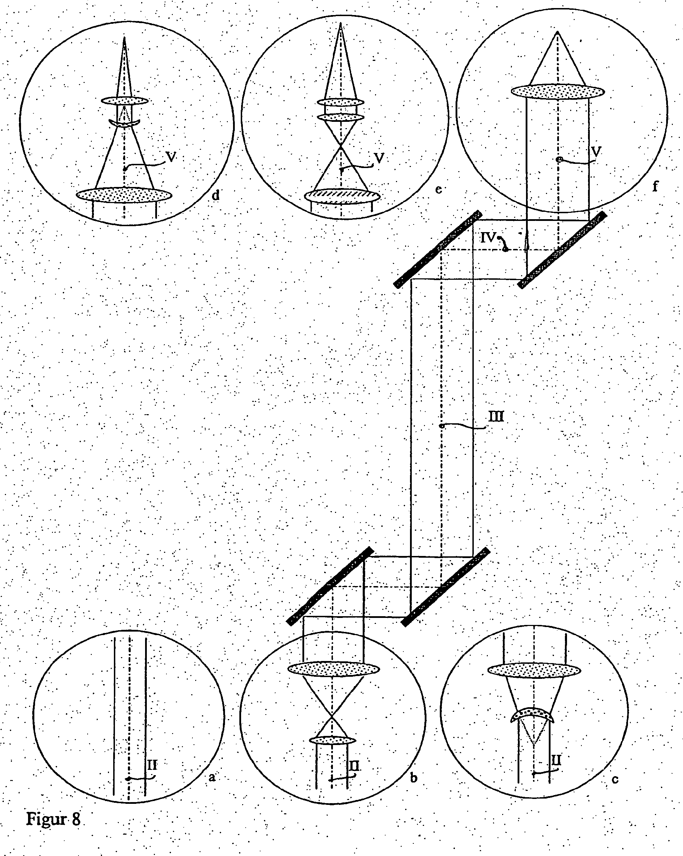

Fig. 7,8 optische Systeme mit hinsenteleskopean

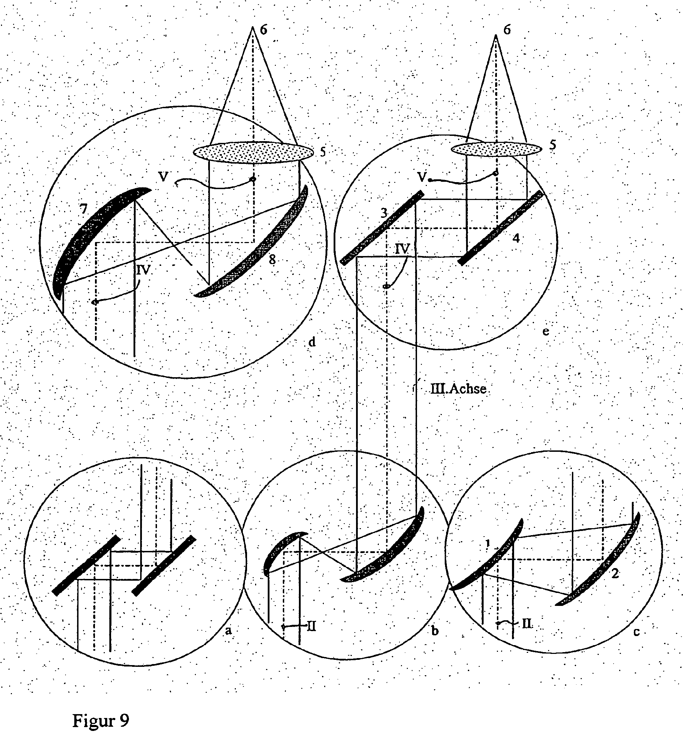

Fig. 9,20 verschiedene Ausführungsvarianten

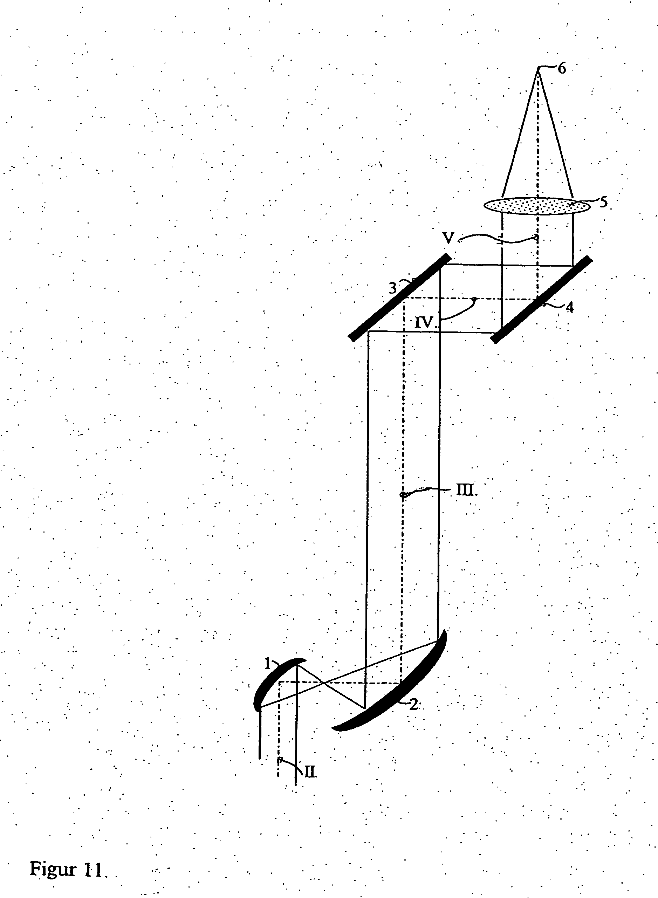

Fig. 11 vorteilhaftes Ausführungsbeispiel

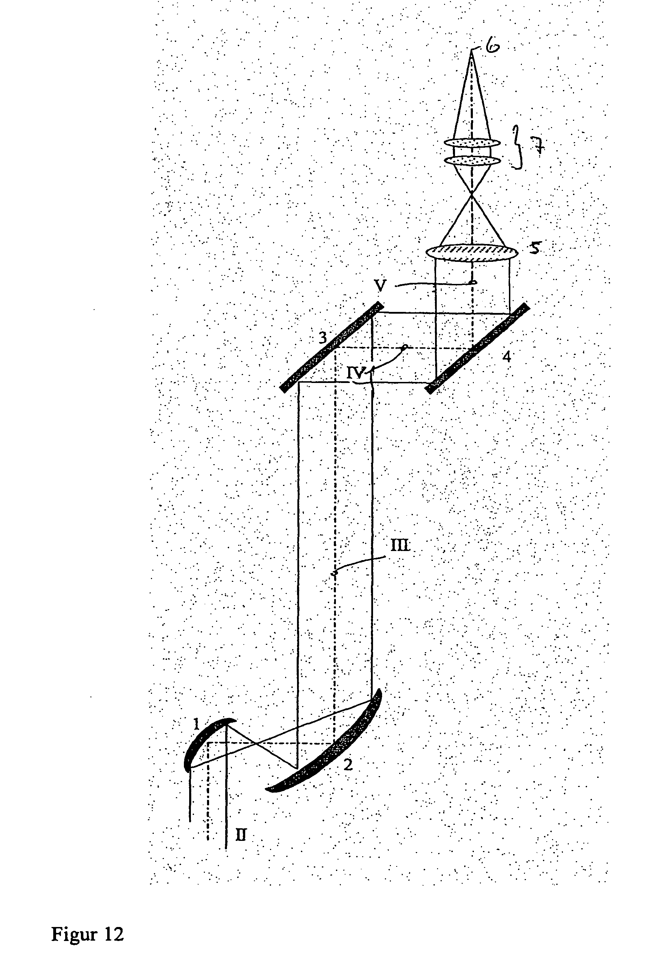

Fig. 12 Ausführungsbeispiel gemäß Fig. 11 mit zusätzlichem Linsenteleskop
Wie bereits in der Beschreibung des Standes der Technik erläutert, zeigen die Fig. 1 bis Fig. 7 jeweils ein auf die Darstellung der optisch formenden und umlenkenden Elemente und die Darstellung des Strahlenverlaufes reduziertes Optikschema eines an sich bekannten optischen Teleskops.

Ein besonders vorteilhaftes Ausführungsbeispiel ist in Fig. 11 dargestellt und soll nachfolgend beschrieben werden.

Der Laser, der an dem zweiten Teilarm des Gelenkarmes eines 5-Achs-Knickarmroboters installiert ist, wird in den dritten Teilarm der eine III. Achse des Roboters definiert, eingekoppelt.
Die Einkopplung erfolgt über zwei Konkavspiegel 1 und 2, die gleichzeitig ein Spiegelteleskop gemäß Fig. 4 bilden. Die Konkavspiegel 1 und 2 ersetzen im Stand der Technik dort positionierte Planspiegel. Sie erfüllen die Aufgabe der sonst üblich verwendeten Planspiegel, indem sie das Strahlenbündel umlenken und bewirken zusätzlich eine Vergrößerung des verbundenen Strahlquerschnittes sowie eine Verringerung der Divergenz der Strahlung. Der Abstand der beiden Konkavspiegel 1 und 2 beträgt ca. 700 mm. Die Konkavspiegel wurden mit ihren Brennweiten so ausgewählt, dass eine 2-fache Aufweitung erreicht wird, d. h. der Strahldurchmesser wird verdoppelt bei gleichzeitiger Halbierung des Divergenzwinkels.
Besonders vorteilhaft bei dieser Ausführung der Erfindung ist, dass für die Realisierung des Teleskops keine zusätzlichen optischen Elemente benötigt werden und gegenüber Strahlführungssystemen nur bestehend aus Umlenkspiegeln und einer Fokussierlinse keine zusätzlichen Leistungsverluste auftreten.
Der so geformte Strahl kann bei Kippung der III. Achse des Roboters problemlos übertragen werden, da die Spiegelgeometrie des Teleskops, d. h. der beiden Konkavspiegel 1, 2 zueinander, rotationssymmetrisch ausgelegt ist. Über normale Planspiegel 3 und 4 wird der Strahl von der III. zur IV. und V. Achse des Roboters gelenkt, wo er schließlich die Fokussieroptik 5 passiert und in der Brennebene 6 der Fokussieroptik 5 fokussiert wird.
Mit dem so aufgeweiteten Strahl kann aufgrund der verringerten Divergenz ein kleinerer Fokusdurchmesser erzielt werden. Die auf die Umlenkspiegel innerhalb des Gelenkarmes auftreffende Laserstrahlung hat eine geringere Leistungsdichte, was zu einer geringeren Belastung der Spiegel führt.

Durch die Nachordnung eines zusätzlichen Linsenteleskops wie in Fig. 12 gezeigt, kann der Strahldurchmesser wieder reduziert werden, was zwar wieder zur Vergrößerung des Fokusquerschnittes aber gleichzeitig auch zur Vergrößerung des Tiefenschärfebereiches führt.
Optische Systeme mit Linzenteleskgren sind in den Fig. 7 und 8 gezeigt. Durch die Kombination von Teildarstellungen a, b oder c mit jeweils einer der Teildarstellungen d, e oder f der jeweiligen Figuren, entstehen eine Vielzahl von denkbaren Zusammenzliellongen
Das Ansführungsbeispiel gemäß Fig. 9 mit Spiegelteleskopen hat gegenüber den Systemen gemäß den Fig. 7 oder Fig. 8 mit Linsenteleskopen den Vorteil, dass die Laserleistungsverluste um ca. 3-5% reduziert sind. Bei einem 500 W-Laser sind das 15 - 25 W. Da die Leistungsdichte der Fokussierung sich quadratisch überträgt bedeutet das ca. 15 W ²- 25 W² oder 225 W - 525 W mehr Leistung im Laserfokus. Die zusätzliche Anschaffung sowie Justage des Teleskops fällt weg.

Meist wird das Teleskop unmittelbar nach Laserausgang angeordnet. In Fig. 7 befindet sich z. B. der Laser auf der zweiten Achse eines 5 Achsen-Knickarmroboters. Gemäß Teilausschnitt b in Fig. 7 wird ein Linsenteleskop nach Kepler und gemäß Teilausschnitt c in Fig. 7 ein Linsenteleskop nach Galilei verwendet. Vorteilhaft ist ein solches System bei sehr stark divergenter Laserstrahlung, da hier über den langen optischen Übertragungsweg von ca. 1,5 - 2,5 m innerhalb der III-V. Achse (je nach Baugröße des Roboters) der Aufweitungswinkel des Laserstrahls genügend gut über die Entfernung komprimiert wird, bei gleichzeitig optimaler Aufweitung des Durchmessers des Laserstrahls.
Eine Kombination der Teilausschnitte b und c mit d, e oder f ist möglich. Es ist genauso möglich, entsprechend Teilausschnitt a, bei dem keine Aufweitung am Laserausgang vorgenommen wird (wenn die Divergenz des Lasers unkritisch ist) mit den Teilausschnitten d oder e zu kombinieren.
Letztendlich können sowohl nach dem Laserausgang und ebenso in der IV. oder sogar erst in der V. Achse Linsenteleskope angeordnet werden, wenn ein gewünschter größerer oder kleinerer Strahldurchmesser für die Nutzung von schlanken Schneidköpfen notwenig ist (Fig. 8, Teilausschnitte d und e).

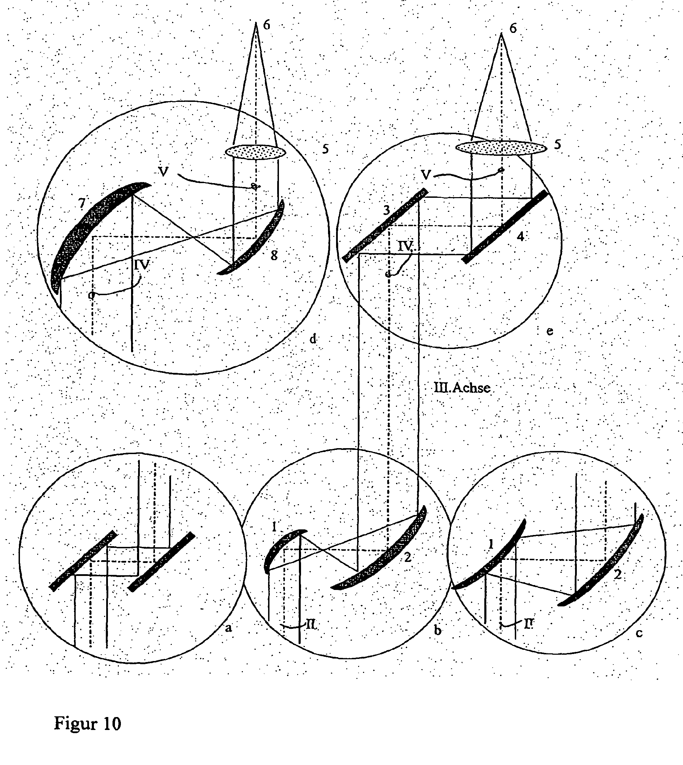

Ausführungsvarianten mit Spiegelteleskopen sind in Fig. 9 gezeigt. Entsprechend Teilausschnitt b wird anstelle der in Teilausschnitt a vorhandenen Planspiegel an gleicher Stelle ein Spiegelteleskop nach Fig. 4 oder entsprechend Teilausschnitt c ein Spiegelteleskop nach Fig. 3 eingebracht. Der Vorteil einer solchen Anordnung liegt darin, dass man kein extra Teleskop benötigt, 3 % Leistungsverlust sowie zusätzlichen Justageaufwand einspart, indem man zwei zur Strahlumlenkung notwendige Spiegel als Teleskop nutzt.
Eine Ausführung des Spiegelteleskops gemäß Teilausschnitt b hat noch einen zusätzlichen Vorteil. Sie ist justagemäßig stabiler, da die Spiegel fokussierend ausgelegt sind. Nachteilig gegenüber dem Linsenteleskop ist generell seine fixe Ausführung, d. h. man kann die Aufweitung bzw. Divergenz nicht variieren. Eine Variation ist nur durch Spiegeltausch möglich.
Durch die rotationssymmetrische Gestaltung der Spiegel kann die III. Achse des Roboters problemlos abgewinkelt werden.
Es ist genauso möglich, entsprechend Teilausschnitt a keine Aufweitung am Laserausgang vorzunehmen (wenn die Divergenz des Lasers unkritisch ist), sondern erst zwischen der IV. und V. Achse entsprechend Teilausschnitt d (Spiegelteleskop gemäß Fig. 4). An dieser Stelle kann gleichfalls ein Spiegelteleskop gemäß Fig. 3 platziert werden.
Letztendlich können sowohl nach dem Laserausgang und ebenso zwischen der IV. und V. Achse Linsenteleskope angeordnet werden, wenn ein gewünschter größerer oder kleinerer Strahldurchmesser für die Nutzung von schlanken Schneidköpfen notwendig ist (siehe Teilausschnitt d in Fig. 10).

## Patentansprüche

1. Gelenkarmroboter mit einem Gelenkarm bestehend aus mehreren Teilarmen, die miteinander über Drehgelenke mechanisch verbunden sind und in denen über ein optisches System, bestehend aus an den Drehgelenken befestigten Spiegeln und einem strahlfokussierenden Element, eine in den Gelenkarm eingekoppelte Laserstrahlung geführt wird,
wobei innerhalb des optischen Systems ein Teleskop vorhanden ist,
**dadurch gekennzeichnet, dass**
das Teleskop ein Spiegeltecleskop ist, welches durch zwei an den Drehgelenken befestigte Spiegel gebildet ist.

2. Gelenkarmroboter nach Anspruch 1, **dadurch gekennzeichnet,**
**dass** die das Spiegelgelenk bildenden Spiegel die in Strahlungsrichtung ersten beiden Spiegel des optischen Systems sind.

## Claims

1. An articulated robot with an articulated arm consisting of several partial arms which are mechanically connected to each other via rotary joints and in which laser radiation coupled into the articulated arm is guided via an optical system consisting of mirrors mounted to the rotary joints and of a beam-focusing element, a telescope being present within the optical system, **characterized in that** said telescope is a reflecting telescope formed by two mirrors which are mounted to the rotary joints.

2. Articulated robot according to claim 1, **characterized in that** the mirrors forming the mirror joint are the first two mirrors of the optical system in the direction of radiation.

## Revendications

1. Robot articulé avec un bras articulé se composant de plusieurs segments de bras qui sont mécaniquement reliés les uns aux autres par des articulations tournantes et dans lesquels un rayonnement laser couplé dans le bras articulé est guidé par moyen d'un système optique consistant en des miroirs montés aux articulations tournantes et d'un élément de focalisation du rayonnement, un télescope étant présent dans le système optique, **caractérisé en ce que** ledit télescope est un télescope à miroir constitué par deux miroirs qui sont montés aux articulations tournantes.

2. Robot articulé selon la revendication 1, **caractérisé en ce que** les miroirs formant l'articulation à miroir sont les premiers deux miroirs du système optique dans la direction de rayonnement.
